(19) **Europäisches Patentamt** / **European Patent Office** / **Office européen des brevets**

(11) **EP 4 229 898 B1**

(12) **EUROPEAN PATENT SPECIFICATION**

(45) Date of publication and mention
of the grant of the patent:
**06.03.2024  Bulletin 2024/10**

(21) Application number: **21769826.5**

(22) Date of filing: **06.09.2021**

(51) International Patent Classification (IPC):
*H04W 24/04* *(2009.01)*     *H04W 88/08* *(2009.01)*
*H04W 28/02* *(2009.01)*

(52) Cooperative Patent Classification (CPC):
**H04W 24/04; H04W 28/02; H04W 88/085**

(86) International application number:
**PCT/SE2021/050852**

(87) International publication number:
**WO 2022/081058 (21.04.2022 Gazette 2022/16)**

(54) **MANAGEMENT OF UPLINK TRANSMISSION OF USER DATA**

VERWALTUNG DER UPLINK-ÜBERTRAGUNG VON BENUTZERDATEN

GESTION DE TRANSMISSION EN LIAISON MONTANTE DE DONNÉES UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.10.2020   US 202063090777 P**

(43) Date of publication of application:
**23.08.2023   Bulletin 2023/34**

(60) Divisional application:
**24153326.4**

(73) Proprietor: **Telefonaktiebolaget LM Ericsson
(publ)
164 83 Stockholm (SE)**

(72) Inventors:
• **ÖSTERLING, Jacob
175 60 JÄRFÄLLA (SE)**
• **HENNERT, Lars
163 46 Spånga (SE)**

• **POHLMAN, Björn
175 51 Järfälla (SE)**

(74) Representative: **Ericsson
Patent Development
Torshamnsgatan 21-23
164 80 Stockholm (SE)**

(56) References cited:
**WO-A1-2019/051869     WO-A1-2019/201963
CN-A- 110 224 755**

• **SANGKYU PARK ET AL: "Large-scale antenna
operation in heterogeneous cloud radio access
networks: a partial centralization approach",
IEEE WIRELESS COMMUNICATIONS, vol. 22, no.
3, 1 June 2015 (2015-06-01), pages 32-40,
XP055405109, US ISSN: 1536-1284, DOI:
10.1109/MWC.2015.7143324**

**Description**

**TECHNICAL FIELD**

Embodiments presented herein relate to a method, a baseband unit, a computer program, and a computer program product for managing uplink transmission of user data. Embodiments presented herein further relate to a method, a radio unit, a computer program, and a computer program product for uplink transmission of user data.

**BACKGROUND**

In communications networks, there may be a challenge to obtain good performance and capacity for a given communications protocol, its parameters and the physical environment in which the communications network is deployed.
For example, a (radio) access network node of a wireless communication (radio) access network (RAN) might comprise a baseband processing part (hereinafter referred to as a baseband unit, or digital unit (DU)) and one or more distributed units (herein referred to as radio units (RUs). The baseband unit and the radio units are operatively connected over an interface. In some examples, this interface is called a fronthaul interface and might be implemented as a fronthaul network.
WO 2019/201963 A1 discloses methods for managing the load of fronthaul data in a distributed radio access network.
The O-RAN Alliance (where O-RAN is short for Open Radio Access Network) has in Working Group 4 specified an open and interoperability capable Fronthaul protocol in the CUS-Specification (where CUS is short for Control-, User- and Synchronization Plane). The traffic in uplink direction (from radio unit to baseband unit) in the fronthaul network is scheduled by the baseband unit. In some examples, a radio unit will never spontaneously send any user data on the interface between the baseband unit and the radio units. However, it could still be that the scheduling as provided by the baseband unit causes packets of uplink user data to be simultaneously, or near-simultaneously, transmitted on the interface between the baseband unit and the radio units.
Hence, there is still a need for an improved handling of uplink transmission of user data from the radio units to the baseband unit so that collisions of packets of uplink user data on the interface between the baseband unit and the radio units are avoided.

**SUMMARY**

An object of embodiments herein is to provide efficient handling of uplink transmission of user data from the radio units to the baseband unit such that the above issues are avoided, or at least mitigated or reduced.
The invention is defined by the attached claims. The following aspects are provided only for illustrative purposes.
According to a first aspect there is presented a method for managing uplink transmission of user data. The method is performed by a baseband unit. The baseband unit is operatively connected to at least two radio units. The method comprises sending a control message to the at least two radio units. The control message comprises parameters pertaining to transmission of uplink user data from the at least two radio units to the baseband unit. The parameters specify a transmission window per each of the at least two radio units for the transmission of uplink user data to the baseband unit. The method comprises receiving uplink user data from the at least two radio units in accordance with the parameters.
According to a second aspect there is presented a baseband unit for managing uplink transmission of user data. The baseband unit is operatively connected to at least two radio units and comprises processing circuitry. The processing circuitry is configured to cause the baseband unit to send a control message to the at least two radio units. The control message comprises parameters pertaining to transmission of uplink user data from the at least two radio units to the baseband unit. The parameters specify a transmission window per each of the at least two radio units for the transmission of uplink user data to the baseband unit. The processing circuitry is configured to cause the baseband unit to receive uplink user data from the at least two radio units in accordance with the parameters.
According to a third aspect there is presented a baseband unit for managing uplink transmission of user data. The baseband unit is operatively connected to at least two radio units. The baseband unit comprises a send module configured to send a control message to the at least two radio units. The control message comprises parameters pertaining to transmission of uplink user data from the at least two radio units to the baseband unit. The parameters specify a transmission window per each of the at least two radio units for the transmission of uplink user data to the baseband unit. The baseband unit comprises a receive module configured to receive uplink user data from the at least two radio units in accordance with the parameters.
According to a fourth aspect there is presented a computer program for managing uplink transmission of user data. The computer program comprises computer program code which, when run on processing circuitry of a baseband unit, causes the baseband unit to perform a method according to the first aspect.

According to a fifth aspect there is presented a method for uplink transmission of user data. The method is performed by a radio unit. The radio unit is operatively connected to a baseband unit. The method comprises receiving a control message from the baseband unit. The control message comprises parameters pertaining to transmission of uplink user data from the radio unit to the baseband unit. The parameters specify a transmission window for the radio unit for the transmission of uplink user data to the baseband unit. The method comprises sending uplink user data to the baseband unit in accordance with the parameters.

According to a sixth aspect there is presented a radio unit for uplink transmission of user data. The radio unit is operatively connected to a baseband unit and comprises processing circuitry. The processing circuitry is configured to cause the radio unit to receive a control message from the baseband unit. The control message comprises parameters pertaining to transmission of uplink user data from the radio unit to the baseband unit. The parameters specify a transmission window for the radio unit for the transmission of uplink user data to the baseband unit. The processing circuitry is configured to cause the radio unit to send uplink user data to the baseband unit in accordance with the parameters.

According to a seventh aspect there is presented a radio unit for uplink transmission of user data. The radio unit is operatively connected to a baseband unit. The radio unit comprises a receive module configured to receive a control message from the baseband unit. The control message comprises parameters pertaining to transmission of uplink user data from the radio unit to the baseband unit. The parameters specify a transmission window for the radio unit for the transmission of uplink user data to the baseband unit. The radio unit comprises a send module configured to send uplink user data to the baseband unit in accordance with the parameters.

According to an eighth aspect there is presented a computer program for uplink transmission of user data, the computer program comprising computer program code which, when run on processing circuitry of a radio unit, causes the radio unit to perform a method according to the fifth aspect.

According to a ninth aspect there is presented a computer program product comprising a computer program according to at least one of the fourth aspect and the eighth aspect and a computer readable storage medium on which the computer program is stored. The computer readable storage medium could be a non-transitory computer readable storage medium.

Advantageously, these methods, these baseband units, these radio units, these computer programs, and this computer program product, provide handling of uplink transmission of user data from the radio units to the baseband unit where the above issues are avoided.

Advantageously, by means of the parameters in the control message sent from the baseband unit to the radio units the issues disclosed above are resolved.

Advantageously, these methods, these baseband units, these radio units, these computer programs, and this computer program product, enable the transmissions of the uplink user data from several radio units to the baseband unit to be evenly distributed in time.

Advantageously, by having the parameters for the radio units sent in each scheduler request, a dynamic solution can be implemented that enables the total amount of uplink user data from several radio units to be adapted in the most efficient way. The scheduler request might be defined by data associated control information sent in a control plane message from the baseband unit to the radio unit. In turn this data associated control information might indicate what uplink data each radio unit shall forward to the baseband unit. The baseband unit, when deciding the amount and type of data to request the radio units to send, can therefore optimize how and when the data shall be sent to the baseband unit.

In some embodiments, the parameters specify at least one of: start of the transmission window per each of the at least two radio units, size of the transmission window per each of the at least two radio units, type of transmission in the transmission window per each of the at least two radio units.

In some embodiments, the type of transmission indicates whether the uplink user data is to be evenly distributed over time within the transmission window or is to be sent in burst-mode within the transmission window.

Other objectives, features and advantages of the enclosed embodiments will be apparent from the following detailed disclosure, from the attached dependent items as well as from the drawings.

Generally, all terms used in the list of claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating a communications system;

Fig. 2 is a schematic diagram illustrating a (radio) access network node;

Fig. 3 and Fig. 4 are flowcharts of methods;

Fig. 5, Fig. 6, Fig. 7 and Fig. 8 are schematic illustrations of transmission of uplink user data;

Fig. 9 is a schematic diagram showing functional units of a baseband unit;

Fig. 10 is a schematic diagram showing functional modules of a baseband unit;

Fig. 11 is a schematic diagram showing functional units of a radio unit;

Fig. 12 is a schematic diagram showing functional modules of a radio unit; and

Fig. 13 shows one example of a computer program product comprising computer readable means.

**DETAILED DESCRIPTION**

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

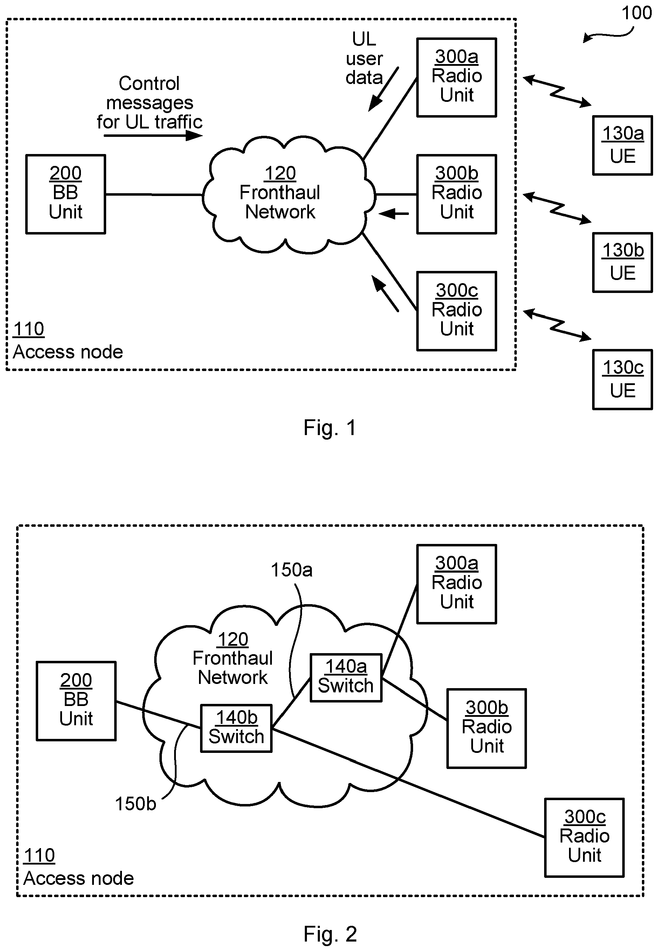

**Fig. 1** is a schematic diagram illustrating a communications system 100 where embodiments presented herein can be applied. The communications system 100 comprises a (radio) access node 110 and wireless devices 130a, 130b, 130c. The (radio) access node 110 could be any of a radio base station, base transceiver station, node B, evolved node B, gNB, access point, access node, integrated access and backhaul node. Each wireless device 130a, 130b, 130c could be any of a portable wireless device, mobile station, mobile phone, handset, wireless local loop phone, user equipment (UE), smartphone, laptop computer, tablet computer, wearable electronic device, wireless modem, wireless sensor device, network equipped vehicle. In turn, the (radio) access node 110 comprises a baseband (BB) unit 200 and radio units 300a, 300b, 300c. The baseband unit 200 and the radio units 300a, 300b, 300c might thus be part of an access network node 110. In some examples, the baseband unit 200 is an O-DU (short for O-RAN DU, i.e., Open Radio Access Network Digital Unit) and each of the radio units 300a, 300b, 300c is a respective O-RU (short for O-RAN RU, i.e., Open Radio Access Network Radio Unit). It is understood that the (radio) access node 110 in general comprises at least two radio units 300a, 300b, 300c and might thus comprise a plurality of radio units 300a, 300b, 300c. The baseband unit 200 might be utilized by one or more mobile network operator, where each mobile network operator possibly is operating different radio access technologies with respect to each other.

The baseband unit 120 is operatively connected to the radio units 300a, 300b, 300c for downlink (DL) transmission of user data (towards the wireless devices 130a, 130b, 130c) and for uplink (UL) reception of user data (from the wireless devices 130a, 130b, 130c). The baseband unit 120 and the radio units 300a, 300b, 300c are operatively connected over an interface. According to the illustrative example of Fig. 1 the interface is represented by a fronthaul network 120. The baseband unit 200 and the radio units 300a, 300b, 300c might thus be operatively connected over a fronthaul network 120. The fronthaul network 120 is a packet based switched network where the link between the baseband unit 200 and the fronthaul network 120 is shared between the radio units 300a, 300b, 300c.

**Fig. 2** in more detail illustrates the (radio) access node 110 and the fronthaul network 120 in particular. In the illustrative example of Fig. 2, the baseband unit 200 is operatively connected to the radio units 300a, 300b, 300c via switches 140a, 140b, such that branch 150a is shared between radio unit 300a and radio unit 300b, and branch 150b is shared between all radio units 300a, 300b, 300c. Further, in the illustrative example of Fig. 2, the latency, or delay, between radio unit 300c and the baseband unit 200 is greater than the latency, or delay, between radio units 300a, 300b and the baseband unit 200.

As disclosed above, there is still a need for an improved handling of uplink transmission of user data from the radio units to the baseband unit since it could still be that the scheduling as provided by the baseband unit 200 in control messages for UL traffic causes packets of UL user data to be simultaneously, or near-simultaneously, transmitted on the interface between the baseband unit and the radio units.

In more detail, there is currently not any mechanism specified in the CUS-Specification to manage when in time each individual radio unit 300a, 300b, 300c will transmit its uplink user data to the baseband unit 200. When a radio unit 300a, 300b, 300c receives a request for transmission of its user data to the baseband unit 200 the radio will, as soon as any necessary processing is completed, send that user data over the interface. This could lead to that links shared between the radio units 300a, 300b, 300c will be congested, or even over-loaded and result in that packets with the uplink user data need to be dropped (e.g., by switching units within the fronthaul network 120).

As will be further disclosed below, when requesting uplink user data from the radio units 300a, 300b, 300c, and where the data is available on the air interface at the same point in time, the baseband unit 200 can spread out the transmissions from the radio units 300a, 300b, 300c over time so that no collisions occur on the link between the baseband unit 200 and the fronthaul network 120.

The embodiments disclosed herein in particular relate to mechanisms for managing uplink transmission of user data and uplink transmission of user data. In order to obtain such mechanisms there is provided a baseband unit 200, a method performed by the baseband unit 200, a computer program product comprising code, for example in the form of a computer program, that when run on processing circuitry of the baseband unit 200, causes the baseband unit 200 to perform the method. In order to obtain such mechanisms there is further provided a radio unit 300a, 300b, 300c, a method performed by the radio unit 300a, 300b, 300c, and a computer program product comprising code, for example in the form of a computer program, that when run on processing circuitry of the radio unit 300a, 300b, 300c, causes the radio unit 300a, 300b, 300c to perform the method.

In the following, in all the embodiments of the invention, the following features are **non-optional:**

(i) the parameters comprised in the control message specify what uplink data each radio unit shall forward to the base band unit;
(ii) the baseband unit is an Open Radio Access Network Digital Unit, O-DU, and each radio unit is a respective Open Radio Access Network Radio Unit, O-RU; and
(iii) the control message is sent in a scheduler request for uplink user data.

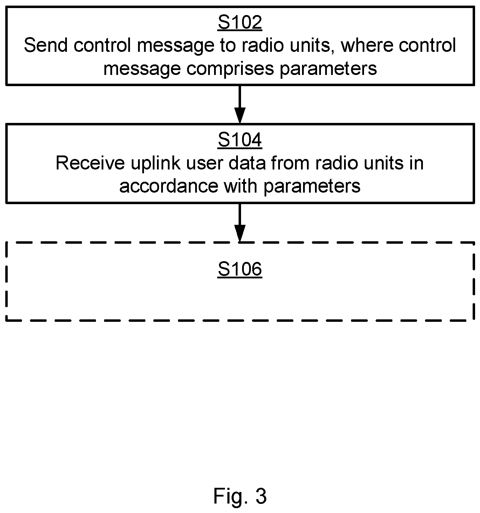

Reference is now made to **Fig. 3** illustrating a method for managing uplink transmission of user data as performed by the baseband unit 200 according to an embodiment. As disclosed above, the baseband unit 200 is operatively connected to at least two radio units 300a, 300b, 300c.

S102: The baseband unit 200 sends a control message to the at least two radio units 300a, 300b, 300c. The control message comprises parameters pertaining to transmission of uplink user data from the at least two radio units 300a, 300b, 300c to the baseband unit 200. The parameters specify a transmission window per each of the at least two radio units 300a, 300b, 300c for the transmission of uplink user data to the baseband unit 200.

S104: The baseband unit 200 receives uplink user data from the at least two radio units 300a, 300b, 300c in accordance with the parameters.

Embodiments relating to further details of managing uplink transmission of user data as performed by the baseband unit 200 will now be disclosed.

In general terms, each radio unit 300a, 300b, 300c is configured to send and receive carriers which in turn have the user data. Each radio unit 300a, 300b, 300c might be configured with one or more, such as multiple, carriers, and there can be different transmission windows for the different carriers. As an example, the O-RAN Control plane and User plane are instantiated per carrier, so the control message sent is relevant for per carrier. In some aspects, the parameters of the control message are therefore valid per carrier at the radio units 300a, 300b, 300c. One and the same control message might therefore comprise parameters for all carriers of the radio units 300a, 300b, 300c.

There may be different examples of parameters. Different embodiments relating thereto will now be described in turn.

In some aspects, there is one transmission window per radio unit 300a, 300b, 300c. That is, in some embodiments, the parameters specify a respective unique non-overlapping transmission window for each of the at least two radio units 300a, 300b, 300c for the transmission of uplink user data to the baseband unit 200. Each of the at least two radio units 300a, 300b, 300c might thus be allocated its own transmission window for the uplink transmission of user data to the baseband unit 200. This could be the case where the transmission window per each of the at least two radio units 300a, 300b, 300c corresponds to the transmitted uplink user data to be present at the shared interface between the baseband unit 200 and the radio units 300a, 300b, 300c at respective unique non-overlapping time intervals. It is noted that transmission windows are non-overlapping with respect to the point in time when the transmitted uplink user data is to be present at the shared interface between the baseband unit 200 and the radio units 300a, 300b, 300c. Hence, the transmission windows are non-overlapping when latency, or delay, for each of the radio units 300a, 300b, 300c also is taken into account. Since each radio unit 300a, 300b, 300c could have its own latency, or delay, to the baseband unit 200, this could thus imply that the transmission windows appear to be overlapping with respect to an absolute time reference (i.e., without taking into account the latency, or delay).

In other aspects, the transmission windows are at least partly overlapping; there could even be one single transmission window that is shared by all radio units 300a, 300b, 300c. That is, in some embodiments, the parameters specify at least partly overlapping transmission windows for the at least two radio units 300a, 300b, 300c for the transmission of uplink user data to the baseband unit 200. In some examples there is one and the same transmission window for all of the at least two radio units 300a, 300b, 300c (i.e., all transmission windows are completely overlapping).

In some aspects, the parameters specify the start of the transmission window. In particular, in some embodiments, the parameters specify start of the transmission window per each of the at least two radio units 300a, 300b, 300c. It is here understood that the transmission window for any given one of the radio units 300a, 300b, 300c has not the same start as the transmission window for any of the other radio units 300a, 300b, 300c. In some non-limiting examples, the start of the transmission window is provided by a parameter denoted startOfΓransmissionWindow. This parameter could thus be used to indicate the start of the allocated transmission window. There could be different resolutions at which the start of the transmission window is specified. For example, the resolution could be one symbol time length. That is, in some embodiments, the start of the transmission window is specified at a time resolution of one symbol. The resolution of the parameter is thus on symbol-basis either as determined via M-plane (when used with message Type 1 and 5) or according to information in parameter frameStructure (when used with message Type 3). To determine the start of the transmission window this parameter could be added to the startSymbolId in the corresponding Control plane (C-plane) message header according to:

$$\text{Start of transmission window} = \text{startSymbolId} + \text{startOfTransmissionWindow} + 1$$

Example: startSymbolId = o, Start of transmission window = 1, i.e. the window starts at the start of symbol 1.

If numSymbol in the section header is > 1 then the number of transmission windows will be equal to numSymbol. The start of each transmission window follows the same procedure as described above for every symbol.

In some aspects, the baseband unit 200 takes the timing parameter Ta3_min of each radio unit 300a, 300b, 200c into account when setting the value of startOfTransmissionWindow.

The startOfTransmissionWindow could have the value range: {0 - 127}, be of type: unsigned integer, have a field length: 7 bits, and/or a default value: 0.

In some aspects, the parameters specify the transmission window size. In particular, in some embodiments, the parameters specify size of the transmission window per each of the at least two radio units 300a, 300b, 300c. It is here understood that the transmission windows for any given pair of the radio units 300a, 300b, 300c could either be of same size or of different sizes. That is, in one extreme, each transmission window is of the same size, whereas in another extreme, each transmission window has its own unique size. In some non-limiting examples, the size of the transmission window is provided by a parameter denoted transmissionWindowSize. This parameter could thus be used to indicate the size of the transmission window. The symbol length is determined by the same assumption as described above. 1 bit indicates the transmission type. There could be different resolutions at which the size of the transmission window is specified. For example, the resolution could be one half symbol time length. That is, in some embodiments, the size of the transmission window is specified at a time resolution of half a symbol. The parameter transmissionWindowSize could thus be used to indicate the size of the transmission window in steps of 0.5 symbol length. The transmissionWindowSize could have the value range: {0 - 127}, be of type: unsigned integer, have a field length: 7 bits, and/or a default value: o.

In some aspects, the parameters specify the type of transmission. In particular, in some embodiments, the parameters specify type of transmission in the transmission window per each of the at least two radio units 300a, 300b, 300c. This parameter could be used to indicates to the radio units 300a, 300b, 300c that the uplink user data should be sent in burst mode (e.g., as soon as possible) or be transmitted evenly in time within the transmission window. Hence, in some embodiments, the type of transmission indicates whether the uplink user data is to be evenly distributed over time within the transmission window or is to be sent in burst-mode within the transmission window. In some embodiments, the type of transmission is indicated by a flag. For example, when the flag is set the uplink user data is to be evenly distributed over time within the transmission window, and when the flag is not set the uplink user data is to be sent in burst-mode within the transmission window (or vice versa). The type of transmission could be of type: unsigned integer, have a field length: 1 bit, and/or a default value: ob, and/or have a value range: {ob - 1b}, where "ob" indicates burst mode; uplink user data should be sent as fast and early as possible within the transmission window, and "1b" indicates that uplink user data should be evenly distributed within the transmission window.

By means of the parameters, management information relating to the uplink transmission of user data could be sent together with the scheduling information to the radio units 300a, 300b. In some embodiments, the control message is thus sent in a scheduler request for uplink user data. As noted above, the scheduler request might be defined by data associated control information sent in a control plane message from the baseband unit to the radio unit. In turn this data associated control information might indicate what uplink data each radio unit shall forward to the baseband unit.

In Fig. 3 the box for step S106 is intentionally left empty to indicate that the method might comprise further steps as derived from any of the above embodiments, aspects, and examples.

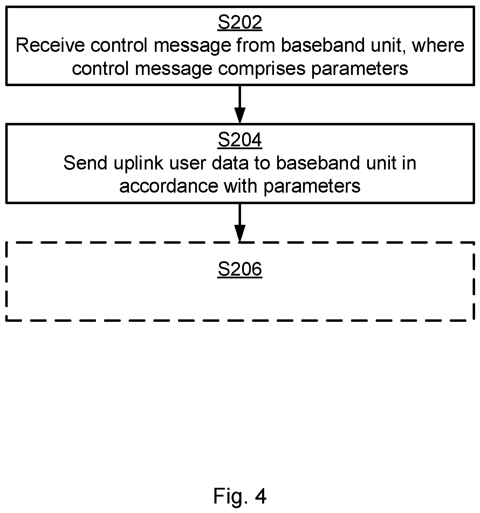

Reference is now made to **Fig. 4** illustrating a method for uplink transmission of user data as performed by the radio unit 300a, 300b, 300c according to an embodiment. As disclosed above, the radio unit 300a, 300b, 300c is operatively connected to a baseband unit 200.

S202: The radio unit 300a, 300b, 300c receives a control message from the baseband unit 200. The control message comprises parameters pertaining to transmission of uplink user data from the radio unit 300a, 300b, 300c to the baseband unit 200. The parameters specify a transmission window for the radio unit 300a, 300b, 300c for the transmission of uplink user data to the baseband unit 200.

S204: The radio unit 300a, 300b, 300c sends uplink user data to the baseband unit 200 in accordance with the parameters.

Embodiments relating to further details of uplink transmission of user data as performed by the radio unit 300a, 300b, 300c will now be disclosed.

In general terms, the embodiments, aspects, and examples as disclosed above with respect to the baseband unit 200 apply equally well to the radio unit 300a, 300b, 300c. The embodiments as disclosed above are repeated hereinafter but with the wording having been adapted to apply to the radio unit 300a, 300b, 300c.

In some aspects, the parameters of the control message are valid per carrier at the radio unit 300a, 300b, 300c.

In some embodiments, the transmission window is unique and non-overlapping with respect to transmission windows of any other radio unit operatively connected to the baseband unit 200. Each radio unit 300a, 300b, 300c might thus be allocated its own transmission window for the uplink transmission of user data to the baseband unit 200.

In some embodiments, the transmission window is shared with at least one other radio unit operatively connected to the baseband unit

In some embodiments, the parameters specify start of the transmission window for the radio unit 300a, 300b, 300c.

In some embodiments, the start of the transmission window is specified at a time resolution of one symbol.

In some embodiments, the parameters specify size of the transmission window for the radio unit 300a, 300b, 300c.

In some embodiments, the size of the transmission window is specified at a time resolution of half a symbol.

In some embodiments, the parameters specify type of transmission in the transmission window for the radio unit 300a, 300b, 300c.

In some embodiments, the type of transmission indicates whether the uplink user data is to be evenly distributed over time within the transmission window or is to be sent in burst-mode within the transmission window.

In some embodiments, the type of transmission is indicated by a flag.

In some embodiments, the control message is received in a scheduler request for the uplink user data.

In some embodiments, the radio unit 300a, 300b, 300c is operatively connected to the baseband unit 200 over a fronthaul network.

In some embodiments, the radio unit 300a, 300b, 300c is an O-RU and the baseband unit 200 is an O-DU.

In some embodiments, the radio unit 300a, 300b, 300c and the baseband unit 200 are part of an access network node.

In Fig. 4 the box for step S206 is intentionally left empty to indicate that the method might comprise further steps as derived from any of the above embodiments, aspects, and examples.

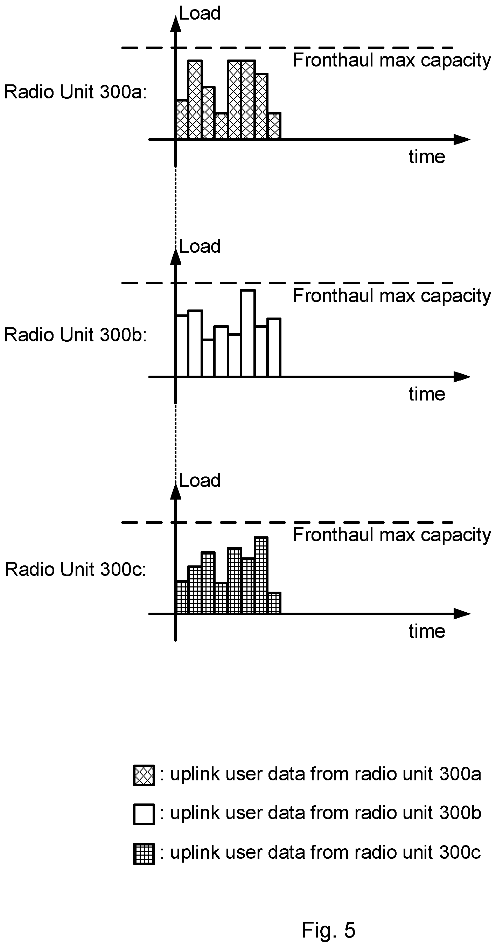

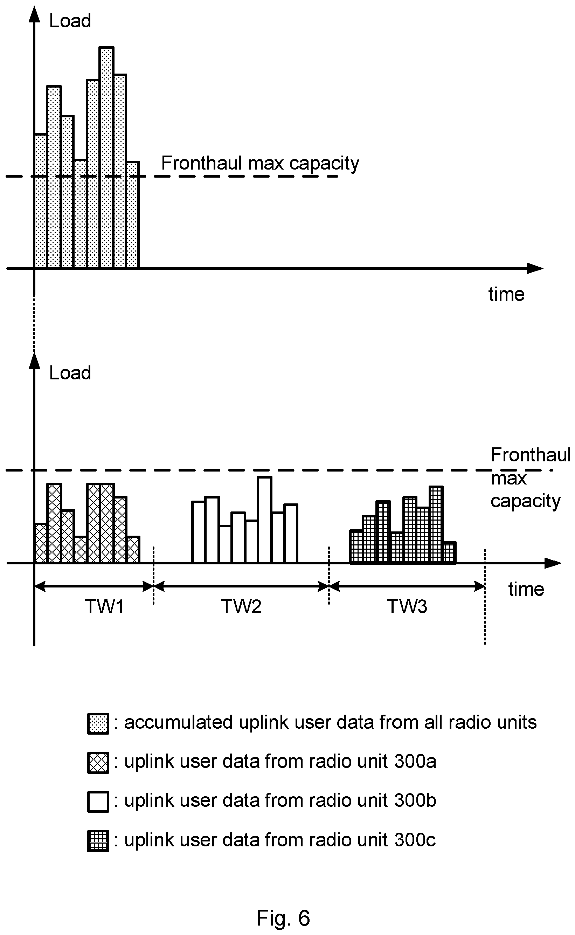

One illustrative example based on at least some of the above disclosed embodiments will now be disclosed in detail with reference to **Fig. 5**, **Fig. 6, Fig. 7**, and **Fig. 8.** Fig. 5, Fig. 6, Fig. 7, and Fig. 8 schematically illustrate an example where uplink user data is requested by the baseband unit 200 from three different radio units 300a, 300b, 300c. As illustrated in Fig. 5 the uplink user data is collected at the radio units 300a, 300b, 300c (e.g., from the wireless device 130a, 130b, 130c in Fig. 1) during the same time period, as indicated along the time axis. The uplink user data from each of the radio units 300a, 300b, 300c is within the maximum capacity (e.g., in terms of bit rate) of the fronthaul network 120, as indicated along the load axis. However, as illustrated in the top part of each of Figs. 6, 7, 8 the accumulated amount of uplink user data from all the radio units 300a, 300b, 300c will be above the maximum capacity of the fronthaul network 120, as indicated along the load axis. According to the herein disclosed embodiments, each radio unit 300a, 300b, 300c is allocated its own transmission window for the uplink transmission of user data to the baseband unit 200, as indicated along the time axis.

In the illustrative example of Fig. 6, radio unit 300a is allocated transmission window TW1, radio unit 300b is allocated transmission window TW2, and radio unit 300c is allocated transmission window TW3. This enables the transmission of the uplink user data to be spread out in time over the transmission windows. In Fig. 6, the transmission of the uplink user data from the radio units 300a, 300b, 300c is spread out in time in three different transmission windows TW1, TW2, TW3 and as a result the maximum capacity of the fronthaul network 120 is not reached, as indicated along the load axis.

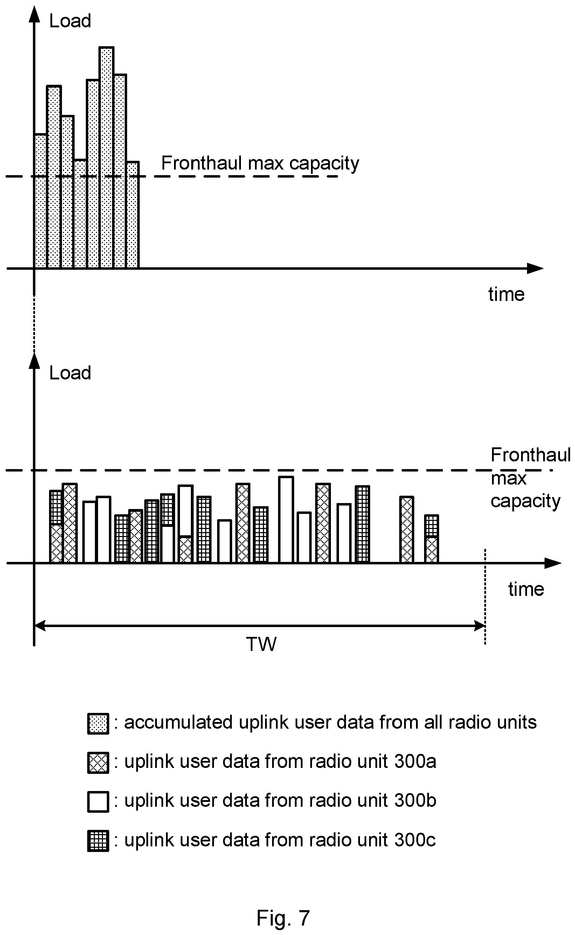

In the illustrative example of Fig. 7, the radio units 300a, 300b, 300c instead share one common transmission window TW. This common transmission window TW could, as illustrated in Fig. 7, then have the size equal to the sum of all individual transmission windows TW1, TW2, TW3 of Fig. 6. Further, if the radio unites 300a, 300b, 300c instead share one common transmission window TW, then the uplink user data from the radio unites 300a, 300b, 300c could be evenly distributed within the transmission window TW, as illustrated in Fig. 7.

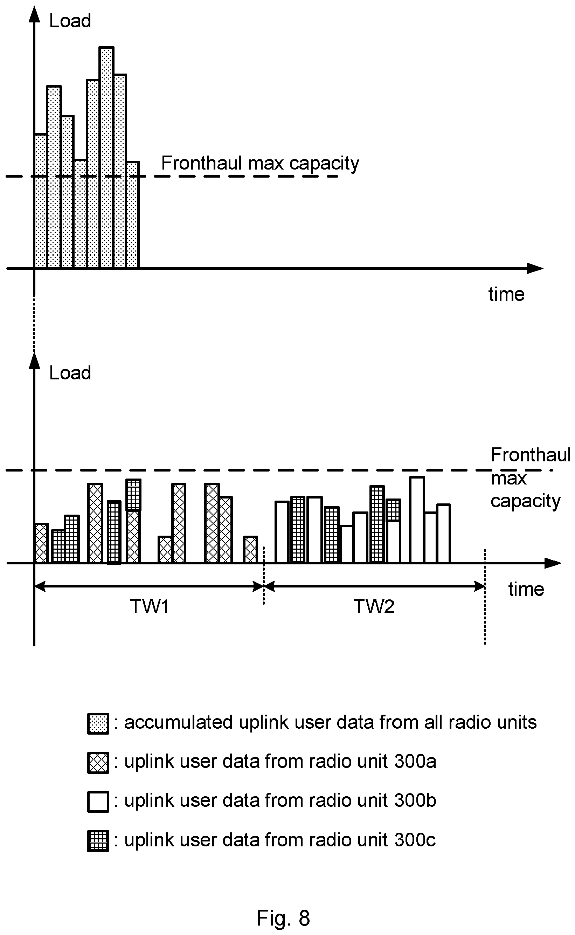

Further, in the illustrative example of Fig. 8, the uplink user data of radio units 300a, 300b is allocated to respective transmission windows TW1, TW2, whereas the uplink user data of radio unit 300c is spread between these two transmission windows TW1, TW2. Hence, the illustrative example of Fig. 8 can be regarded as a combination of the illustrative examples of Fig. 6 and Fig. 7. This example could be suitable for the embodiment of Fig. 2 where the latency, or delay, between radio unit 300c and the baseband unit 200 is greater than the latency, or delay, between radio units 300a, 300b and the baseband unit 200.

In summary, with the herein disclosed parameters included in a section extension, each radio unit 300a, 300b, 300c shall transmit its corresponding uplink user data within the specified transmission window. The uplink user data shall be evenly distributed in time within the transmission window if so requested. If uplink user data can be sent in one User plane (U-Plane) message, the radio unit 300a, 300b, 300c shall send that uplink user data at a random time within the transmission window if a flag is set to indicate evenly distributed transmission. If uplink user data will be sent in several U-Plane messages, the messages shall be evenly distributed within the transmission window if a flag is set to indicate evenly distributed transmission. The parameters are defined per section in an O-RAN C-plane control message. That is, different transmission windows with different transmission types can be applied to different user data parts.

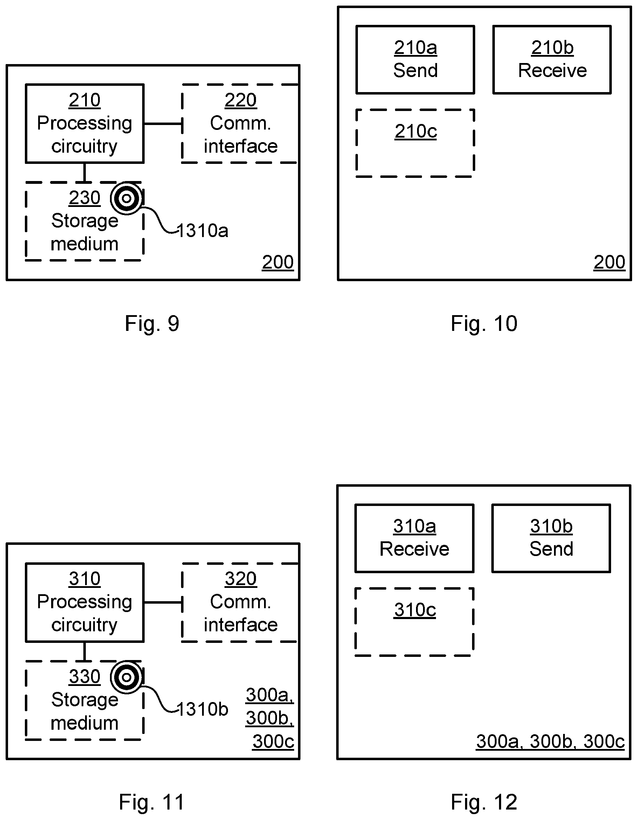

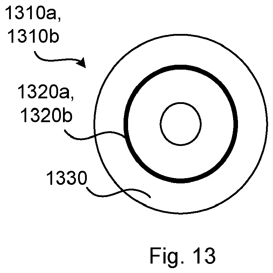

**Fig. 9** schematically illustrates, in terms of a number of functional units, the components of a baseband unit 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1310a (as in Fig. 13), e.g., in the form of a storage medium 230. The processing circuitry 210 may further be provided as at least one application specific integrated circuit (ASIC), or field programmable gate array (FPGA).

Particularly, the processing circuitry 210 is configured to cause the baseband unit 200 to perform a set of operations, or steps, as disclosed above. For example, the storage medium 230 may store the set of operations, and the processing circuitry 210 may be configured to retrieve the set of operations from the storage medium 230 to cause the baseband unit 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The baseband unit 200 may further comprise a communications interface 220 for communications at least with the radio units 300a, 300b, 300c. As such the communications interface 220 may comprise one or more transmitters and receivers, comprising analogue and digital components.

The processing circuitry 210 controls the general operation of the baseband unit 200 e.g., by sending data and control signals to the communications interface 220 and the storage medium 230, by receiving data and reports from the communications interface 220, and by retrieving data and instructions from the storage medium 230. Other components, as well as the related functionality, of the baseband unit 200 are omitted in order not to obscure the concepts presented herein.

**Fig. 10** schematically illustrates, in terms of a number of functional modules, the components of a baseband unit 200 according to an embodiment. The baseband unit 200 of Fig. 10 comprises a number of functional modules; a send module 210a configured to perform step S102, and a receive module 210b configured to perform step S104. The baseband unit 200 of Fig. 10 may further comprise a number of optional functional modules, as represented by functional module 210c. In general terms, each functional module 210a:210c may be implemented in hardware or in software. Preferably, one or more or all functional modules 210a:210c may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210c and to execute these instructions, thereby performing any steps of the baseband unit 200 as disclosed herein.

**Fig. 11** schematically illustrates, in terms of a number of functional units, the components of a radio unit 300a, 300b, 300c according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1310b (as in Fig. 13), e.g., in the form of a storage medium 330. The processing circuitry 310 may further be provided as at least one application specific integrated circuit (ASIC), or field programmable gate array (FPGA).

Particularly, the processing circuitry 310 is configured to cause the radio unit 300a, 300b, 300c to perform a set of operations, or steps, as disclosed above. For example, the storage medium 330 may store the set of operations, and the processing circuitry 310 may be configured to retrieve the set of operations from the storage medium 330 to cause the radio unit 300a, 300b, 300c to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The radio unit 300a, 300b, 300c may further comprise a communications interface 320 for communications at least with the baseband unit 200 and the wireless devices 130a, 130b, 130c. As such the communications interface 320 may comprise one or more transmitters and receivers, comprising analogue and digital components.

The processing circuitry 310 controls the general operation of the radio unit 300a, 300b, 300c e.g., by sending data and control signals to the communications interface 320 and the storage medium 330, by receiving data and reports from the communications interface 320, and by retrieving data and instructions from the storage medium 330. Other components, as well as the related functionality, of the radio unit 300a, 300b, 300c are omitted in order not to obscure the concepts presented herein.

**Fig. 12** schematically illustrates, in terms of a number of functional modules, the components of a radio unit 300a, 300b, 300c according to an embodiment. The radio unit 300a, 300b, 300c of Fig. 12 comprises a number of functional modules; a receive module 310a configured to perform step S202, and a send module 310b configured to perform step S204. The radio unit 300a, 300b, 300c of Fig. 12 may further comprise a number of optional functional modules, as represented by functional module 310c. In general terms, each functional module 310a:310c may be implemented in hardware or in software. Preferably, one or more or all functional modules 310a:310c may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310c and to execute these instructions, thereby performing any steps of the radio unit 300a, 300b, 300c as disclosed herein.

The baseband unit 200 and the radio unit 300a, 300b, 300c may be provided as a standalone device or as a part of at least one further device. For example, the baseband unit 200 and the radio unit 300a, 300b, 300c may be provided in a (radio) access network node 110. Alternatively, functionality of the baseband unit 200 and the radio unit 300a, 300b, 300c may be distributed between at least two devices, or nodes. Thus, a first portion of the instructions performed by the baseband unit 200 / radio unit 300a, 300b, 300c may be executed in a first device, and a second portion of the instructions performed by the baseband unit 200 and the radio unit 300a, 300b, 300c may be executed in a second device; the herein disclosed embodiments are not limited to any particular number of devices on which the instructions performed by the baseband unit 200 and the radio unit 300a, 300b, 300c may be executed. Therefore, although a single processing circuitry 210, 310 is illustrated in Figs. 6 and 8 the processing circuitry 210, 310 may be distributed among a plurality of devices, or nodes. The same applies to the functional modules 210a: 210c, 310a:310c of Figs. 7 and 9 and the computer programs 1320a, 1320b of Fig. 13.

**Fig. 13** shows one example of a computer program product 1310a, 1310b comprising computer readable means 1330. On this computer readable means 1330, a computer program 1320a can be stored, which computer program 1320a can cause the processing circuitry 210 and thereto operatively coupled entities and devices, such as the communications interface 220 and the storage medium 230, to execute methods according to embodiments described herein. The computer program 1320a and/or computer program product 1310a may thus provide means for performing any steps of the baseband unit 200 as herein disclosed. On this computer readable means 1330, a computer program 1320b can be stored, which computer program 1320b can cause the processing circuitry 310 and thereto operatively coupled entities and devices, such as the communications interface 320 and the storage medium 330, to execute methods according to embodiments described herein. The computer program 1320b and/or computer program product 1310b may thus provide means for performing any steps of the radio unit 300a, 300b, 300c as herein disclosed.

In the example of Fig. 13, the computer program product 1310a, 1310b is illustrated as an optical disc, such as a CD (compact disc) or a DVD (digital versatile disc) or a Blu-Ray disc. The computer program product 1310a, 1310b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1320a, 1320b is here schematically shown as a track on the depicted optical disk, the computer program 1320a, 1320b can be stored in any way which is suitable for the computer program product 1310a, 1310b.

**Claims**

1. A method for managing uplink transmission of user data, the method being performed by a baseband unit (200), the baseband unit (200) being operatively connected to at least two radio units (300a:300c), the method comprising:

   sending (S102) a scheduler request for uplink user data to the at least two radio units (300a:300c), the scheduler request comprising a control message comprising parameters pertaining to transmission of uplink user data from the at least two radio units (300a:300c) to the baseband unit (200), wherein the parameters specify a transmission window (TW, TW1, TW2) per each of the at least two radio units (300a:300c) for the transmission of uplink user data to the baseband unit (200), and specify what uplink data each radio unit shall forward to the base band unit; and

receiving (S104) uplink user data from the at least two radio units (300a:300c) in accordance with the parameters, wherein the baseband unit (200) is an Open Radio Access Network Digital Unit, O-DU, and each of the at least two radio units (300a:300c) is a respective Open Radio Access Network Radio Unit, O-RU.

2. The method according to claim 1, comprising the further step of:
determining the amount and type of data to request from each radio unit in said control message.

3. A method for uplink transmission of user data, the method being performed by a radio unit (300a:300c), the radio unit (300a:300c) being operatively connected to a baseband unit (200), the method comprising:

receiving (S202) a scheduler request for uplink user data from the baseband unit (200), the scheduler request comprising a control message comprising parameters pertaining to transmission of uplink user data from the radio unit (300a:300c) to the baseband unit (200), wherein the parameters specify a transmission window (TW, TW1, TW2) for the radio unit (300a:300c) for the transmission of uplink user data to the baseband unit (200), and specify what uplink data each radio unit shall forward to the base band unit; and

sending (S204) uplink user data to the baseband unit (200) in accordance with the parameters, wherein the radio unit (300a:300c) is an Open Radio Access Network Radio Unit, O-RU, and the baseband unit (200) is an Open Radio Access Network Digital Unit, O-DU.

4. The method according to claim 3, wherein the transmission window (TW, TW1, TW2) is unique and non-overlapping with respect to transmission windows (TW, TW1, TW2) of any other radio unit (300a:300c) operatively connected to the baseband unit (200).

5. The method according to claim 3, wherein the transmission window (TW, TW1, TW2) is shared with at least one other radio unit (300a:300c) operatively connected to the baseband unit (200).

6. The method according to claim 3, wherein the parameters specify start of the transmission window (TW, TW1, TW2) for the radio unit (300a:300c).

7. The method according to claim 3, wherein the parameters specify size of the transmission window (TW, TW1, TW2) for the radio unit (300a:300c).

8. The method according to claim 3, wherein the parameters specify type of transmission in the transmission window (TW, TW1, TW2) for the radio unit (300a:300c).

9. The method according to claim 3, wherein the radio unit (300a:300c) and the baseband unit (200) are part of an access network node (110).

10. A baseband unit (200) for managing uplink transmission of user data, the baseband unit (200) being operatively connected to at least two radio units (300a:300c) and comprising processing circuitry (210), the processing circuitry (210) being configured to cause the baseband unit (200) to:

send a scheduler request for uplink user data to the at least two radio units (300a:300c), the scheduler request comprising a control message comprising parameters pertaining to transmission of uplink user data from the at least two radio units (300a:300c) to the baseband unit (200), wherein the parameters specify a transmission window (TW, TW1, TW2) per each of the at least two radio units (300a:300c) for the transmission of uplink user data to the baseband unit (200), and specify what uplink data each radio unit shall forward to the base band unit; and

receive uplink user data from the at least two radio units (300a:300c) in accordance with the parameters, wherein the baseband unit (200) is an Open Radio Access Network Digital Unit, O-DU, and each of the at least two radio units (300a:300c) is a respective Open Radio Access Network Radio Unit, O-RU.

11. The baseband unit (200) according to claim 10, further being configured to perform the method according to claim 2.

**12.** A radio unit (300a:300c) for uplink transmission of user data, the radio unit (300a:300c) being operatively connected to a baseband unit (200) and comprising processing circuitry (310), the processing circuitry (310) being configured to cause the radio unit (300a:300c) to:

receive a scheduler request for uplink user data from the baseband unit (200), the scheduler request comprising a control message comprising parameters pertaining to transmission of uplink user data from the radio unit (300a:300c) to the baseband unit (200), wherein the parameters specify a transmission window (TW, TW1, TW2) for the radio unit (300a:300c) for the transmission of uplink user data to the baseband unit (200), and specify what uplink data each radio unit shall forward to the base band unit; and
send uplink user data to the baseband unit (200) in accordance with the parameters, wherein the radio unit (300a:300c) is an Open Radio Access Network Radio Unit, O-RU, and the baseband unit (200) is an Open Radio Access Network Digital Unit, O-DU.

**13.** The radio unit (300a:300c) according to claim 12, further being configured to perform the method according to any of claims 3 - 9.

**14.** A computer program (1320a) for managing uplink transmission of user data, the computer program (1320a) comprising computer code which, when run on processing circuitry (210) of a baseband unit (200) operatively connected to at least two radio units (300a:300c), causes the baseband unit (200) to:

send (S102) a scheduler request for uplink user data to the at least two radio units (300a:300c), the scheduler request comprising a control message comprising parameters pertaining to transmission of uplink user data from the at least two radio units (300a:300c) to the baseband unit (200), wherein the parameters specify a transmission window (TW, TW1, TW2) per each of the at least two radio units (300a:300c) for the transmission of uplink user data to the baseband unit (200), and specify what uplink data each radio unit shall forward to the base band unit; and
receive (S102) uplink user data from the at least two radio units (300a:300c) in accordance with the parameters, wherein the baseband unit (200) is an Open Radio Access Network Digital Unit, O-DU, and each of the at least two radio units (300a:300c) is a respective Open Radio Access Network Radio Unit, O-RU.

**15.** A computer program (1320b) for uplink transmission of user data, the computer program (1320b) comprising computer code which, when run on processing circuitry (310) of a radio unit (300a:300c) being operatively connected to a baseband unit (200), causes the radio unit (300a:300c) to:

receive (S202) a scheduler request for uplink user data from the baseband unit (200), the scheduler request comprising a control message comprising parameters pertaining to transmission of uplink user data from the radio unit (300a:300c) to the baseband unit (200), wherein the parameters specify a transmission window (TW, TW1, TW2) for the radio unit (300a:300c) for the transmission of uplink user data to the baseband unit (200), and specify what uplink data each radio unit shall forward to the base band unit; and
send (S204) uplink user data to the baseband unit (200) in accordance with the parameters, wherein the radio unit (300a:300c) is a Open Radio Access Network Radio Unit, O-RU, and the baseband unit (200) is an Open Radio Access Network Digital Unit, O-DU.

**Patentansprüche**

**1.** Verfahren zum Verwalten einer Uplink-Übertragung von Benutzerdaten, wobei das Verfahren durch eine Basisbandeinheit (200) durchgeführt wird, wobei die Basisbandeinheit (200) mit mindestens zwei Funkeinheiten (300a:300c) wirkverbunden ist, wobei das Verfahren Folgendes umfasst:

Senden (S102) einer Planeranforderung für Uplink-Daten an die mindestens zwei Funkeinheiten (300a:300c), wobei die Planeranforderung eine Steuerungsnachricht umfasst, die Parameter umfasst, die Übertragung von Uplink-Benutzerdaten von den mindestens zwei Funkeinheiten (300a:300c) an die Basisbandeinheit (200) betreffen, wobei die Parameter ein Übertragungsfenster (TW, TW1, TW2) für jede der mindestens zwei Funkeinheiten (300a:300c) für die Übertragung von Uplink-Benutzerdaten an die Basisbandeinheit (200) spezifizieren und spezifizieren, welche Uplink-Daten jede Funkeinheit an die Basisbandeinheit weiterzuleiten hat; und
Empfangen (S104) von Uplink-Benutzerdaten von den mindestens zwei Funkeinheiten (300a:300c) gemäß den Parametern, wobei die Basisbandeinheit (200) eine digitale Einheit eines offenen Funkzugangsnetzes, O-DU, ist und jede der mindestens zwei Funkeinheiten (300a:300c) eine jeweilige Funkeinheit eines offenen Funkzugangsnetzes, O-RU, ist.

2. Verfahren nach Anspruch 1, ferner den folgenden Schritt umfassend:
Bestimmen der Menge und Art von Daten zum Anfordern von jeder Funkeinheit in der Steuerungsnachricht.

3. Verfahren für Uplink-Übertragung von Benutzerdaten, wobei das Verfahren durch eine Funkeinheit (300a:300c) durchgeführt wird, wobei die Funkeinheit (300a:300c) mit einer Basisbandeinheit (200) wirkverbunden ist, wobei das Verfahren Folgendes umfasst:

Empfangen (S202) einer Planeranforderung für Uplink-Benutzerdaten von der Basisbandeinheit (200), wobei die Planeranforderung eine Steuerungsnachricht umfasst, die Parameter umfasst, die Übertragung von Uplink-Benutzerdaten von der Funkeinheit (300a:300c) an die Basisbandeinheit (200) betreffen, wobei die Parameter ein Übertragungsfenster (TW, TW1, TW2) für die Funkeinheit (300a:300c) für die Übertragung von Uplink-Benutzerdaten an die Basisbandeinheit (200) spezifizieren und spezifizieren, welche Uplink-Daten jede Funkeinheit an die Basisbandeinheit weiterzuleiten hat; und
Senden (S204) von Uplink-Benutzerdaten an die Basisbandeinheit (200) gemäß den Parametern, wobei die Funkeinheit (300a:300c) eine Funkeinheit eines offenen Funkzugangsnetzes, O-RU, ist und die Basisbandeinheit (200) eine digitale Einheit eines offenen Funkzugangsnetzes, O-DU, ist.

4. Verfahren nach Anspruch 3, wobei das Übertragungsfenster (TW, TW1, TW2) eindeutig ist und sich in Bezug auf Übertragungsfenster (TW, TW1, TW2) einer beliebigen anderen Funkeinheit (300a:300c), die mit der Basisbandeinheit (200) wirkverbunden ist, nicht überdeckt.

5. Verfahren nach Anspruch 3, wobei das Übertragungsfenster (TW, TW1, TW2) mit mindestens einer anderen Funkeinheit (300a:300c), die mit der Basisbandeinheit (200) wirkverbunden ist, geteilt wird.

6. Verfahren nach Anspruch 3, wobei die Parameter einen Beginn des Übertragungsfensters (TW, TW1, TW2) für die Funkeinheit (300a:300c) spezifizieren.

7. Verfahren nach Anspruch 3, wobei die Parameter eine Größe des Übertragungsfensters (TW, TW1, TW2) für die Funkeinheit (300a:300c) spezifizieren.

8. Verfahren nach Anspruch 3, wobei die Parameter eine Art der Übertragung in dem Übertragungsfenster (TW, TW1 TW2) für die Funkeinheit (300a:300c) spezifizieren.

9. Verfahren nach Anspruch 3, wobei die Funkeinheit (300a:300c) und die Basisbandeinheit (200) Teil eines Zugangsnetzknotens (110) sind.

10. Basisbandeinheit (200) zum Verwalten von Uplink-Übertragung von Benutzerdaten, wobei die Basisbandeinheit (200) mit mindestens zwei Funkeinheiten (300a:300c) wirkverbunden ist und eine Verarbeitungsschaltung (210) umfasst, wobei die Verarbeitungsschaltung (210) dazu konfiguriert ist, die Basisbandeinheit (200) zu Folgendem zu veranlassen:

Senden einer Planeranforderung für Uplink-Benutzerdaten an die mindestens zwei Funkeinheiten (300a:300c), wobei die Planeranforderung eine Steuerungsnachricht umfasst, die Parameter umfasst, die Übertragung von Uplink-Benutzerdaten von den mindestens zwei Funkeinheiten (300a:300c) an die Basisbandeinheit (200) betreffen, wobei die Parameter ein Übertragungsfenster (TW, TW1, TW2) für jede der mindestens zwei Funkeinheiten (300a:300c) für die Übertragung von Uplink-Benutzerdaten an die Basisbandeinheit (200) spezifizieren und spezifizieren, welche Uplink-Daten jede Funkeinheit an die Basisbandeinheit weiterzuleiten hat; und
Empfangen von Uplink-Benutzerdaten von den mindestens zwei Funkeinheiten (300a:300c) gemäß den Parametern, wobei die Basisbandeinheit (200) eine digitale Einheit eines offenen Funkzugangsnetzes, O-DU, ist und jede der mindestens zwei Funkeinheiten (300a:300c) eine jeweilige Funkeinheit eines offenen Funkzugangsnetzes, O-RU, ist.

11. Basisbandeinheit (200) nach Anspruch 10, die ferner dazu konfiguriert ist, das Verfahren nach Anspruch 2 durchzuführen.

12. Funkeinheit (300a:300c) für Uplink-Übertragung von Benutzerdaten, wobei die Funkeinheit (300a:300c) mit einer Basisbandeinheit (200) wirkverbunden ist und eine Verarbeitungsschaltung (310) umfasst, wobei die Verarbeitungsschaltung (310) dazu konfiguriert ist, die Funkeinheit (300a:300c) zu Folgendem zu veranlassen:

Empfangen einer Planeranforderung für Uplink-Benutzerdaten von der Basisbandeinheit (200), wobei die Planeranforderung eine Steuerungsnachricht umfasst, die Parameter umfasst, die Übertragung von Uplink-Benutzerdaten von der Funkeinheit (300a:300c) an die Basisbandeinheit (200) betreffen, wobei die Parameter ein Übertragungsfenster (TW, TW1, TW2) für die Funkeinheit (300a:300c) für die Übertragung von Uplink-Benutzerdaten an die Basisbandeinheit (200) spezifizieren und spezifizieren, welche Uplink-Daten jede Funkeinheit an die Basisbandeinheit weiterzuleiten hat; und
Senden von Uplink-Benutzerdaten an die Basisbandeinheit (200) gemäß den Parametern, wobei die Funkeinheit (300a:300c) eine Funkeinheit eines offenen Funkzugangsnetzes, O-RU, ist und die Basisbandeinheit (200) eine digitale Einheit eines offenen Funkzugangsnetzes, O-DU, ist.

13. Funkeinheit (300a:300c) nach Anspruch 12, die ferner dazu konfiguriert ist, das Verfahren nach einem der Ansprüche 3-9 durchzuführen.

14. Computerprogramm (1320a) zum Verwalten von Uplink-Übertragung von Benutzerdaten, wobei das Computerprogramm (1320a) Computercode umfasst, der, wenn er auf einer Verarbeitungsschaltung (210) einer Basisbandeinheit (200), die mit mindestens zwei Funkeinheiten (300a:300c) wirkverbunden ist, ausgeführt wird, die Basisbandeinheit (200) zu Folgendem veranlasst:

Senden (S102) einer Planeranforderung für Uplink-Benutzerdaten an die mindestens zwei Funkeinheiten (300a:300c), wobei die Planeranforderung eine Steuerungsnachricht umfasst, die Parameter umfasst, die Übertragung von Uplink-Benutzerdaten von den mindestens zwei Funkeinheiten (300a:300c) an die Basisbandeinheit (200) betreffen, wobei die Parameter ein Übertragungsfenster (TW, TW1, TW2) für jede der mindestens zwei Funkeinheiten (300a:300c) für die Übertragung von Uplink-Benutzerdaten an die Basisbandeinheit (200) spezifizieren und spezifizieren, welche Uplink-Daten jede Funkeinheit an die Basisbandeinheit weiterzuleiten hat; und
Empfangen (S102) von Uplink-Benutzerdaten von den mindestens zwei Funkeinheiten (300a:300c) gemäß den Parametern, wobei die Basisbandeinheit (200) eine digitale Einheit eines offenen Funkzugangsnetzes, O-DU, ist und jede der mindestens zwei Funkeinheiten (300a:300c) eine jeweilige Funkeinheit eines offenen Funkzugangsnetzes, O-RU, ist.

15. Computerprogramm (1320b) für Uplink-Übertragung von Benutzerdaten, wobei das Computerprogramm (1320b) Computercode umfasst, der, wenn er auf einer Verarbeitungsschaltung (310) einer Funkeinheit (300a:300c), die mit einer Basisbandeinheit (200) wirkverbunden ist, ausgeführt wird, die Funkeinheit (300a:300c) zu Folgendem veranlasst:

Empfangen (S202) einer Planeranforderung für Uplink-Benutzerdaten von der Basisbandeinheit (200), wobei die Planeranforderung eine Steuerungsnachricht umfasst, die Parameter umfasst, die Übertragung von Uplink-Benutzerdaten von der Funkeinheit (300a:300c) an die Basisbandeinheit (200) betreffen, wobei die Parameter ein Übertragungsfenster (TW, TW1, TW2) für die Funkeinheit (300a:300c) für die Übertragung von Benutzerdaten an die Basisbandeinheit (200) spezifizieren und spezifizieren, welche Uplink-Daten jede Funkeinheit an die Basisbandeinheit weiterzuleiten hat;
und
Senden (S204) von Uplink-Benutzerdaten an die Basisbandeinheit (200) gemäß den Parametern, wobei die Funkeinheit (300a:300c) eine Funkeinheit eines offenen Funkzugangsnetzes, O-RU, ist und die Basisbandeinheit (200) eine digitale Einheit eines offenen Funkzugangsnetzes, O-DU, ist.

**Revendications**

1. Procédé de gestion de transmission en liaison montante de données utilisateur, le procédé étant exécuté par une unité de bande de base (200), l'unité de bande de base (200) étant fonctionnellement connectée à au moins deux unités radio (300a:300c), le procédé comprenant :

l'envoi (S102) d'une demande de planificateur pour des données utilisateur de liaison montante aux au moins deux unités radio (300a:300c), la demande de planificateur comprenant un message de commande comprenant des paramètres relatifs à une transmission de données utilisateur de liaison montante en provenance des au moins deux unités radio (300a:300c) à l'unité de bande de base (200), dans lequel les paramètres spécifient une fenêtre de transmission (TW, TW1, TW2) par chacune des au moins deux unités radio (300a:300c) pour la transmission de données utilisateur de liaison montante à l'unité de bande de base (200), et spécifient quelles données de liaison montante chaque unité radio doit transférer à l'unité de bande de base ; et

la réception (S104) de données utilisateur de liaison montante en provenance des au moins deux unités radio (300a:300c) conformément aux paramètres, dans lequel l'unité de bande de base (200) est une unité numérique de réseau d'accès radio ouvert, O-DU, et chacune des au moins deux unités radio (300a:300c) est une unité radio de réseau d'accès radio ouvert, O-RU, respective.

2. Procédé selon la revendication 1, comprenant l'étape supplémentaire de :
détermination de la quantité et du type de données à demander à chaque unité radio dans ledit message de commande.

3. Procédé de transmission en liaison montante de données utilisateur, le procédé étant exécuté par une unité radio (300a:300c), l'unité radio (300a:300c) étant fonctionnellement connectée à une unité de bande de base (200), le procédé comprenant :

la réception (S202) d'une demande de planificateur pour des données utilisateur de liaison montante en provenance de l'unité de bande de base (200), la demande de planificateur comprenant un message de commande comprenant des paramètres relatifs à une transmission de données utilisateur de liaison montante en provenance de l'unité radio (300a:300c) à l'unité de bande de base (200), dans lequel les paramètres spécifient une fenêtre de transmission (TW, TW1, TW2) pour l'unité radio (300a:300c) pour la transmission de données utilisateur de liaison montante à l'unité de bande de base (200), et spécifient quelles données de liaison montante chaque unité radio doit transférer à l'unité de bande de base ; et
l'envoi (S204) de données utilisateur de liaison montante à l'unité de bande de base (200) conformément aux paramètres, dans lequel l'unité radio (300a:300c) est une unité radio de réseau d'accès radio ouvert, O-RU, et l'unité de bande de base (200) est une unité numérique de réseau d'accès radio ouvert, O-DU.

4. Procédé selon la revendication 3, dans lequel la fenêtre de transmission (TW, TW1, TW2) est unique et non chevauchante par rapport aux fenêtres de transmission (TW, TW1, TW2) de toute autre unité radio (300a:300c) fonctionnellement connectée à l'unité de bande de base (200).

5. Procédé selon la revendication 3, dans lequel la fenêtre de transmission (TW, TW1, TW2) est partagée avec au moins une autre unité radio (300a:300c) fonctionnellement connectée à l'unité de bande de base (200).

6. Procédé selon la revendication 3, dans lequel les paramètres spécifient le début de la fenêtre de transmission (TW, TW1, TW2) pour l'unité radio (300a:300c).

7. Procédé selon la revendication 3, dans lequel les paramètres spécifient la taille de la fenêtre de transmission (TW, TW1, TW2) pour l'unité radio (300a:300c).

8. Procédé selon la revendication 3, dans lequel les paramètres spécifient le type de transmission dans la fenêtre de transmission (TW, TW1, TW2) pour l'unité radio (300a:300c).

9. Procédé selon la revendication 3, dans lequel l'unité radio (300a:300c) et l'unité de bande de base (200) font partie d'un nœud de réseau d'accès (110).

10. Unité de bande de base (200) de gestion de transmission en liaison montante de données utilisateur, l'unité de bande de base (200) étant fonctionnellement connectée à au moins deux unités radio (300a:300c) et comprenant un circuit de traitement (210), le circuit de traitement (210) étant configuré pour amener l'unité de bande de base (200) à :

envoyer une demande de planificateur pour des données utilisateur de liaison montante aux au moins deux unités radio (300a:300c), la demande de planificateur comprenant un message de commande comprenant des paramètres relatifs à une transmission de données utilisateur de liaison montante en provenance des au moins deux unités radio (300a:300c) à l'unité de bande de base (200), dans laquelle les paramètres spécifient une fenêtre de transmission (TW, TW1, TW2) par chacune des au moins deux unités radio (300a:300c) pour la transmission de données utilisateur de liaison montante à l'unité de bande de base (200), et spécifient quelles données de liaison montante chaque unité radio doit transférer à l'unité de bande de base ; et

recevoir des données utilisateur de liaison montante en provenance des au moins deux unités radio (300a:300c) conformément aux paramètres, dans laquelle l'unité de bande de base (200) est une unité numérique de réseau d'accès radio ouvert, O-DU, et chacune des au moins deux unités radio (300a:300c) est une unité radio de réseau d'accès radio ouvert, O-RU, respective.

11. Unité de bande de base (200) selon la revendication 10, étant en outre configurée pour exécuter le procédé selon la revendication 2.

12. Unité radio (300a:300c) de transmission en liaison montante de données utilisateur, l'unité radio (300a:300c) étant fonctionnellement connectée à une unité de bande de base (200) et comprenant un circuit de traitement (310), le circuit de traitement (310) étant configuré pour amener l'unité radio (300a:300c) à :

recevoir une demande de planificateur pour des données utilisateur de liaison montante en provenance de l'unité de bande de base (200), la demande de planificateur comprenant un message de commande comprenant des paramètres relatifs à une transmission de données utilisateur de liaison montante en provenance de l'unité radio (300a:300c) à l'unité de bande de base (200), dans laquelle les paramètres spécifient une fenêtre de transmission (TW, TW1, TW2) pour l'unité radio (300a:300c) pour la transmission de données utilisateur de liaison montante à l'unité de bande de base (200), et spécifient quelles données de liaison montante chaque unité radio doit transférer à l'unité de bande de base ; et

envoyer des données utilisateur de liaison montante à l'unité de bande de base (200) conformément aux paramètres, dans laquelle l'unité radio (300a:300c) est une unité radio de réseau d'accès radio ouvert, O-RU, et l'unité de bande de base (200) est une unité numérique de réseau d'accès radio ouvert, O-DU.

13. Unité radio (300a:300c) selon la revendication 12, étant en outre configurée pour exécuter le procédé selon l'une quelconque des revendications 3 à 9.

14. Programme informatique (1320a) de gestion de transmission en liaison montante de données utilisateur, le programme informatique (1320a) comprenant un code informatique qui, lorsqu'il est exécuté sur un circuit de traitement (210) d'une unité de bande de base (200) fonctionnellement connectée à au moins deux unités radio (300a:300c), amène l'unité de bande de base (200) à :

envoyer (S102) une demande de planificateur pour des données utilisateur de liaison montante aux au moins deux unités radio (300a:300c), la demande de planificateur comprenant un message de commande comprenant des paramètres relatifs à une transmission de données utilisateur de liaison montante en provenance des au moins deux unités radio (300a:300c) à l'unité de bande de base (200), dans lequel les paramètres spécifient une fenêtre de transmission (TW, TW1, TW2) par chacune des au moins deux unités radio (300a:300c) pour la transmission de données utilisateur de liaison montante à l'unité de bande de base (200), et spécifient quelles données de liaison montante chaque unité radio doit transférer à l'unité de bande de base ; et

recevoir (S102) des données utilisateur de liaison montante en provenance des au moins deux unités radio (300a:300c) conformément aux paramètres, dans lequel l'unité de bande de base (200) est une unité numérique de réseau d'accès radio ouvert, O-DU, et chacune des au moins deux unités radio (300a:300c) est une unité radio de réseau d'accès radio ouvert, O-RU, respective.

15. Programme informatique (1320b) de transmission en liaison montante de données utilisateur, le programme informatique (1320b) comprenant un code informatique qui, lorsqu'il est exécuté sur un circuit de traitement (310) d'une unité radio (300a:300c) fonctionnellement connectée à une unité de bande de base (200), amène l'unité radio (300a:300c) à :

recevoir (S202) une demande de planificateur pour des données utilisateur de liaison montante en provenance de l'unité de bande de base (200), la demande de planificateur comprenant un message de commande comprenant des paramètres relatifs à une transmission de données utilisateur de liaison montante en provenance de l'unité radio (300a:300c) à l'unité de bande de base (200), dans lequel les paramètres spécifient une fenêtre de transmission (TW, TW1, TW2) pour l'unité radio (300a:300c) pour la transmission de données utilisateur de liaison montante à l'unité de bande de base (200), et spécifient quelles données de liaison montante chaque unité radio doit transférer à l'unité de bande de base ; et

envoyer (S204) des données utilisateur de liaison montante à l'unité de bande de base (200) conformément aux paramètres, dans lequel l'unité radio (300a:300c) est une unité radio de réseau d'accès radio ouvert, O-RU, et l'unité de bande de base (200) est une unité numérique de réseau d'accès radio ouvert, O-DU.

Fig. 1

Fig. 2

S102
Send control message to radio units, where control
message comprises parameters

S104
Receive uplink user data from radio units in
accordance with parameters

S106

Fig. 3

S202
Receive control message from baseband unit, where control message comprises parameters

S204
Send uplink user data to baseband unit in accordance with parameters

S206

Fig. 4

Load

Fronthaul max capacity

Radio Unit 300a:

time

Load

Fronthaul max capacity

Radio Unit 300b:

time

Load

Fronthaul max capacity

Radio Unit 300c:

time

⬚ : uplink user data from radio unit 300a

☐ : uplink user data from radio unit 300b

⊞ : uplink user data from radio unit 300c

Fig. 5

Load

Fronthaul max capacity

time

Load

Fronthaul max capacity

TW1          TW2          TW3

time

▦ : accumulated uplink user data from all radio units

▧ : uplink user data from radio unit 300a

☐ : uplink user data from radio unit 300b

▦ : uplink user data from radio unit 300c

Fig. 6

: accumulated uplink user data from all radio units

: uplink user data from radio unit 300a

: uplink user data from radio unit 300b

: uplink user data from radio unit 300c

Fig. 7

Fig. 8

EP 4 229 898 B1

Fig. 9

Fig. 10

Fig. 11

Fig. 12

24

1310a,
1310b

1320a,
1320b

1330

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019201963 A1